(19) **Europäisches Patentamt / European Patent Office / Office européen des brevets**

(11) **EP 1 798 132 A1**

(12) **EUROPEAN PATENT APPLICATION**

(43) Date of publication:
  **20.06.2007 Bulletin 2007/25**

(51) Int Cl.:
  **B62D 5/04** *(2006.01)*

(21) Application number: **06025874.6**

(22) Date of filing: **13.12.2006**

(84) Designated Contracting States:
  **AT BE BG CH CY CZ DE DK EE ES FI FR GB GR HU IE IS IT LI LT LU LV MC NL PL PT RO SE SI SK TR**
  Designated Extension States:
  **AL BA HR MK YU**

(30) Priority: **15.12.2005 JP 2005362106**

(71) Applicant: **NSK LTD.**
  **Shinagawa-ku,**
  **Tokyo (JP)**

(72) Inventor: **Kawada, Hideaki**
  **Maebashi-shi**
  **Gunma 371-8527 (JP)**

(74) Representative: **Grünecker, Kinkeldey,**
  **Stockmair & Schwanhäusser**
  **Anwaltssozietät**
  **Maximilianstrasse 58**
  **80538 München (DE)**

(54) **Electric power steering system**

(57)     An electric power steering system is provided which includes a current command value calculation unit 10 for calculating a current command value based on a steering torque signal and a vehicle speed signal and a motor driving unit 52 for controlling a motor 8 for imparting a steering assist force to a steering mechanism based on the current command value. The electric power steering system has further a voltage detection unit 17 for detecting a voltage of a power supply source 11 for supplying power to the motor driving unit 52 and a phase compensating unit 58 provided on the current command value calculation unit 10 and adapted to select characteristics based on a voltage of the power supply source.

FIG. 1

EP 1 798 132 A1

**Description**

TECHNICAL FIELD

The present disclosure relates to an electric power steering system which includes a current command value calculation unit for calculating a current command value based on a steering torque signal and a vehicle speed signal and a motor driving unit for controlling a motor for imparting a steering assist force to a steering mechanism based on the current command value.

RELATED ART

The electric power steering system of this type is configured such that a steering assist force is imparted to a steering mechanism by calculating a steering assist command value by a steering assist command value calculation unit based on a steering torque generated in a steering shaft, calculating a current command value from the steering assist command value so calculated and a current value of the motor and supplying this current command value so calculated to a motor driving circuit to which a battery voltage is supplied, so as to impart a steering assist force to the steering mechanism (refer to, for example, Patent Document No. 1: Japanese Patent Unexamined Publication No. Hei. 8-337172 (pages 3 to 4, Fig. 2)).

In the related-art example described in Patent Document No. 1 mentioned above, however, since the battery voltage is applied to the motor driving circuit so as to drive the motor, in the event that a steering wheel is rapidly turned while the battery voltage is low, an inter-motor-terminal voltage is decreased by virtue of a counter electromotive force of the motor, leading to an unsolved problem that the steering assist force outputted from the motor decreases, whereby the driver feels a heavy steering feeling.

In addition, when a battery which is deteriorated much is used, an internal resistance of the battery increases when the steering wheel is turned, and as the motor current increases when the steering wheel is turned rapidly, the reduction in motor battery becomes remarkable. As a result, the inter-motor-terminal voltage cannot be secured sufficiently, whereby the steering assist force outputted from the motor is decreased, leading to the unsolved problem that the steering assist force outputted from the motor decreases, whereby the driver feels a heavy steering feeling.

SUMMARY

Embodiments of the present invention provide an electric power steering system which can secure the steering assist force which is generated by the motor when the battery voltage decreases.

According to a first aspect of one or more embodiments of the invention, an electric power steering system comprises a current command value calculation unit for calculating a current command value based on a steering torque signal and a vehicle speed signal, a motor driving unit for controlling a motor for imparting a steering assist force to a steering mechanism based on the current command value, a voltage detection unit for detecting a voltage of a power supply source for supplying power to the motor driving unit, and a phase compensating unit provided on the current command value calculation unit and adapted to select characteristics based on a voltage of the power supply source.

In addition, according to a second aspect of one of more embodiments of the invention, there is provided an electric power steering system as set forth in the first aspect of the invention, wherein the phase compensating unit is adapted to select the characteristics so as to suppress a turning follow-up capability when the voltage detection unit detects that the voltage of the power supply source is lower than a set voltage.

Furthermore, according to a third aspect of one or more embodiments of the invention, there is provided an electric power steering system as set forth in the first aspect of the invention, wherein the phase compensating unit is adapted to select a characteristic to secure the turning follow-up capability when the value of a vehicle speed signal is a set value or larger, whereas with the value of the vehicle speed signal being smaller than the set value, the phase compensating unit is adapted to select a characteristic to suppress the turning follow-up capability when the voltage of the power supply source decreases below the set voltage.

Various implementations may include one or more the following advantages. For example, when the battery voltage of the power supply source such as the battery decrease, the turning follow-up capability is decreased so as to suppress the rapid turning of the steering wheel, whereby as a result, the counter electromotive force in the motor is made difficult to be generated, so that the steering assist force can be secured by making the driver turn the steering wheel slowly by such an extent that the steering wheel is made difficult to be turned, thereby making it possible to obtain an effect that feeling the heavy steering feel can be avoided which would otherwise be experienced by the driver due to the steering assist force being decreased.

Other features and advantages may be apparent from the following detailed description, the accompanying drawings and the claims.

BRIEF DESCRIPTION OF THE DRAWINGS

Fig. 1 is a schematic diagram showing the configuration of an electric power steering system according to a first embodiment of the invention.

Fig. 2 is a block diagram showing a functional configuration of a control system according to the invention.

Fig. 3 is a characteristic curve diagram which shows a steering assist command value calculation map which shows a relationship with a steering torque assist command value with vehicle speed used as a parameter.

Fig. 4A is a diagram showing gain characteristics according to vehicle speed.

Fig. 4B is a diagram showing phase characteristics according to vehicle speed.

Fig. 5 is a flowchart showing an example of a steering assist control process procedure which is executed in a control unit in the first embodiment of the invention.

Fig. 6 is a flowchart showing an example of a steering assist control process procedure which is executed in a control unit in a second embodiment of the invention.

DETAILED DESCRIPTION

Embodiments of the invention will be described below based on the accompanying drawings.

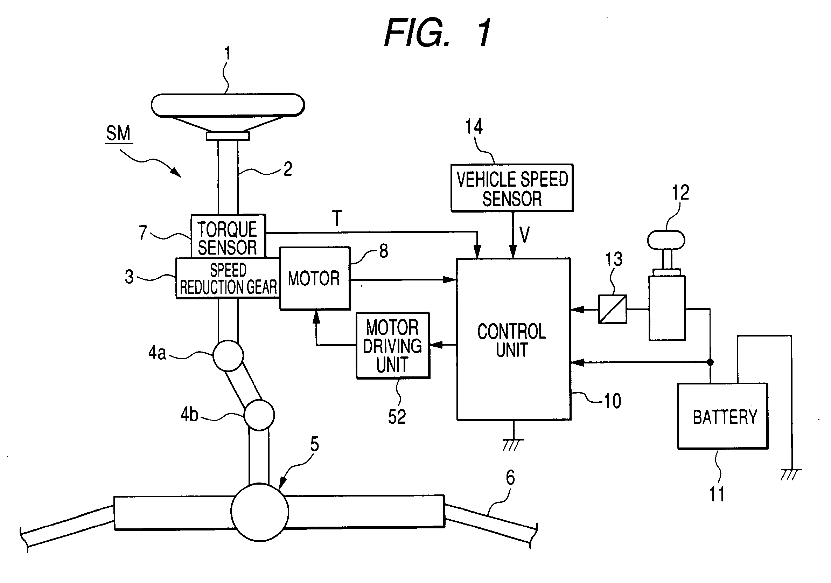

Fig. 1 is an overall configuration diagram which shows a first embodiment of the invention, and in the figure, SM denotes a steering mechanism, and this steering mechanism SM has a steering shaft 2 which is connected to a steering wheel 1, and this steering shaft 2 is coupled to tie rods 6 of steering road wheels via universal joints 4a and 4b and a rack-and-pinion mechanism 5.

A torque sensor 7 is provided on the steering shaft 2 for detecting a steering torque of the steering wheel 1, and a motor 8 for assisting in imparting a steering force to the steering wheel 1 is connected to the steering shaft 2 via a speed reduction gear 3.

In addition, power is supplied to a control unit 10 for controlling an electric power steering system as a current command value calculation unit made up of, for example, an MCU (Micro Controller Unit) via an ignition key 12 and a relay 13, and the control unit 10 performs an calculation of a motor current command value $I_M$ based on a steering torque T detected by the torque sensor 7 and a vehicle speed V detected by a vehicle speed sensor 14 and outputs this current command value $I_M$ to a motor driving unit 52, which will be described later on, so as to control a current that is to be supplied to the motor 8.

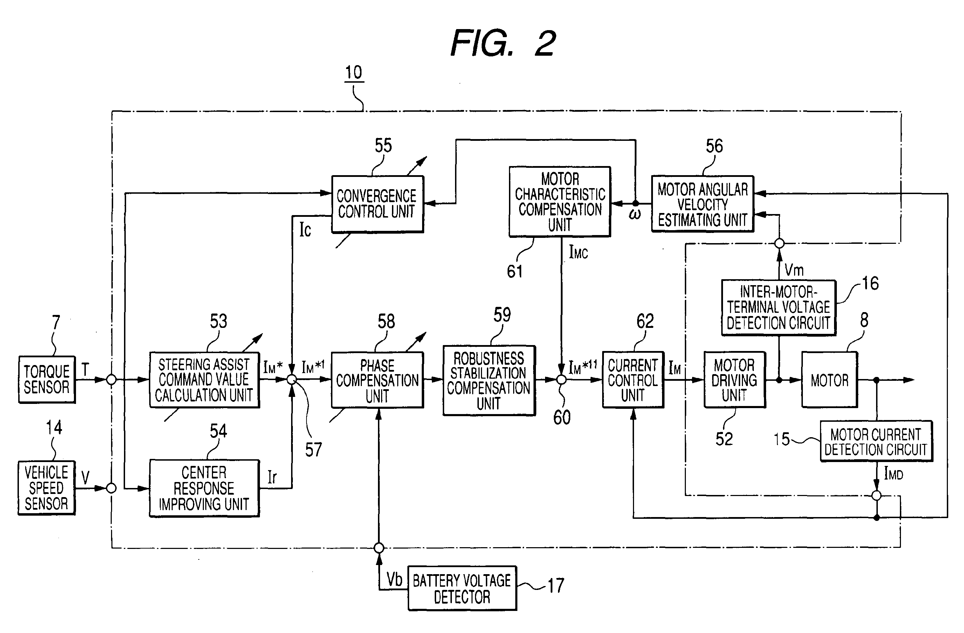

Additionally, Fig. 2 is a system configuration diagram in the form of a function block diagram of the control unit 10 which shows schematically the configuration of a control system of the electric power steering system. In the figure, the motor 8 which gives a steering assist force to the steering mechanism SM is driven by the motor driving unit 52, and this motor driving unit 52 is controlled by the control unit 10. Inputted into the control unit 10 are a steering torque T from the torque sensor 7, a vehicle speed V from the vehicle speed sensor 14, a motor current detection value $I_{MD}$ from a motor current detection circuit 15, an intrer-motor-terminal voltage Vm from an inter-motor-terminal voltage detection circuit 16 and a battery voltage Vb from a battery voltage detector 17.

In addition, a steering assist command value calculation unit 53, a center response improving unit 54 and a convergence control unit 55 are provided in the control unit 10.

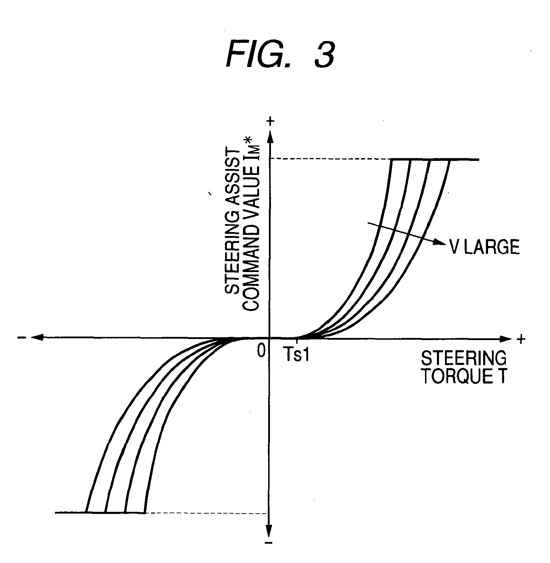

The steering assist command value calculation unit 52 calculates a steering assist command value $I_M^*$ as a current command value by referring to a steering assist command value calculation map shown in Fig. 3 based on a steering torque T from the torque sensor 7 and a vehicle speed from the vehicle speed sensor 14. Here, as is shown in Fig. 3, the steering assist command value calculation map is made up of a characteristic diagram represented by parabolic curves in which the steering torque is expressed by an axis of abscissas, the steering assist command value $I_M^*$ is expressed by an axis of ordinates, and the vehicle speed V is used as a parameter, and is set such that the steering assist command value $I_M^*$ maintains "0" while the steering torque T stays within a range from 0 to a set value Ts1, whereas when the steering torque T exceeds the set value Ts1, the steering assist command value $I_M^*$ initially increases moderately as the steering torque T increases, but when the steering torque T increases further, the steering assist command value $I_M^*$ is set to increase steeply relative to the increase of the steering torque, and inclinations of the characteristic curves are set so as to become smaller as the vehicle speed increases.

The center response improving unit 54 differentiates the steering torque T to calculate a center response improving command value Ir which secures the safety in an assist characteristic non-sensing zone and compensates for a static friction in order to enhance the response of a controlling in the vicinity of a neutral position of the steering wheel and realize a smooth steering.

Furthermore, the convergence controlling unit 55 receives a steering torque T and a motor angular velocity ω from a motor angular velocity estimating unit 56 and calculates a convergence control value Ic by multiplying the motor angular velocity ω by a convergence control gain Kv which is altered according to the vehicle speed V so as to suppress a run-out rotating operation of the steering wheel in order to improve the convergence of yawing of the vehicle.

In addition, respective outputs of the steering assist command value calculation unit 53, the center response improving unit 54 and the convergence controlling unit 55 are designed to be inputted into a phase compensating unit 58 via an adder 57. The stability and response of the control system are adjusted by the phase compensating unit 58, and this phase compensating unit 58 is made up of a phase advance compensator which is expressed by a transfer function $G(s)=(T1 \cdot s+1)/(T2 \cdot s+1)$ in which s functions as a Laplace operator and a phase delay/advance compensator which is expressed by a transfer function $G(s) = (T3 \cdot s+1)(T1 \cdot s+1) / (T4 \cdot s+1)(T2 \cdot s+1)$, and a phase compensation characteristic is changed by a battery voltage Vb which is detected by the battery voltage detector 17.

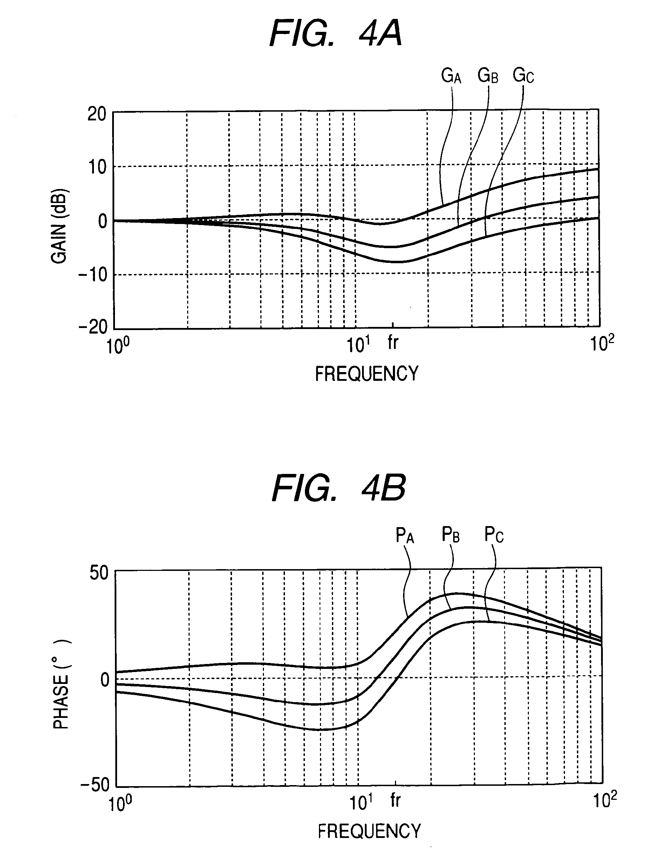

Namely, in a normal state in which the battery voltage Vb is a primary set voltage Vb1 (for example, 9V) or larger, a gain (dB) is substantially 0 in a low frequency area where the frequency is equal to or lower than a resonance frequency fr (for example, 10.3Hz) as shown in Fig. 4A and the gain is affected by a disturbance and, hence, not desired to be transferred to the motor driving unit 52, whereas in a high frequency area where the frequency exceeds the resonance frequency fr and, hence, the gains is desired to be transferred to the motor driving unit 52, the gain (dB) is set to a gain characteristic $G_A$ which increases gradually. A phase (°) is, as shown in Fig. 4B, put in a state where a phase advance is close to zero in the low frequency area where the frequency is lower than the resonance frequency fr and is set to a phase characteristic $P_A$ where the phase advances at a steep inclination angle in the vicinity of the resonance frequency fr and thereafter, after the phase has passed its peak value, the phase advance is gradually reduced.

In addition, when the battery voltage Vb is in a slightly decreased state in which the battery voltage Vb is smaller than the primary set voltage Vb1 but is equal to or larger than a secondary set voltage Vb1 which is smaller than the primary set voltage Vb1, as shown in Fig. 4A, the gain (dB) is set to a gain characteristic $G_B$ which takes a lower gain value than the gain characteristic $G_A$, and the phase is, as shown in Fig. 4B, set to a phase characteristic $P_B$ in which a phase delay amount is gradually increased in the low frequency area where frequency is lower than the resonance frequency fr, a phase advance amount is increased after the phase delay is restored to "0" in the vicinity of the resonance frequency, and the phase advance amount is reduced after the phase has passed its peak value.

Furthermore, when the battery voltage Vb is less than the secondary set voltage Vb2, the gain (dB) is, as shown in Fig. 4A, set to a gain characteristic $G_C$ which takes a lower gain value than the gain characteristic $G_B$, and the phase (°) is set to a phase characteristic $P_C$ in which the phase delay amount becomes larger than the phase characteristic $P_B$ in the lower frequency area where the frequency is lower the resonance frequency fr and the phase advance amount becomes smaller than the phase characteristic $P_B$ after the phase delay has reached "0" in the vicinity of the resonance frequency.

In addition, a robustness stabilization compensating unit 59, an adder 60, a motor characteristic compensating unit 61 and a current controller 62 are provided in the control unit 10. This robustness stabilization compensating unit 59 receives an output from the phase compensating unit 58 and has a transfer function $G(s)=(s2+a1 \cdot s+a2)/(s2+b1 \cdot s+b2)$ in which s functions as a Laplace operator, so as to remove the peak in the resonance frequency of a resonance system made up of inertia elements and spring elements which is contained in a detected torque to thereby compensate for a deviation in phase of the resonance frequency which disturbs the stability and response of a control system. Note that any of a1, a2, b1 and b2 of the transfer function G(s) is a parameter that is determined by the resonance frequency fr of the resonance system. In addition, the motor angular velocity estimating unit 56 is such as to estimate the angular velocity of the motor 8 based on the inter-motor-terminal voltage and the motor current value, and the estimated angular velocity of the motor 8 is inputted into the motor characteristic compensating unit 61 and the convergence controlling unit 55. Respective outputs of the motor characteristic compensating unit 61 and the robustness stabilization compensating unit 59 are designed to be added together by the adder 60 so as to be inputted into the current controller 62. In the current controller 62, a differential value Id of a post-compensation steering assist command value $I_M{}^*{}''$ that is outputted from the adder 60, a current proportional value $\Delta Ip$ which results from proportional processing of a current deviation $\Delta I$ between the post-compensation steering assist command value $I_M{}^*{}''$ and a motor current detection value $I_{MD}$ and a current integral value $\Delta Ii$ which results from integration of the current proportional value $\Delta Ip$ are added together to calculate a motor current command value $I_M$, and the calculated motor current command value $I_M$ is then outputted to the motor driving unit 52.

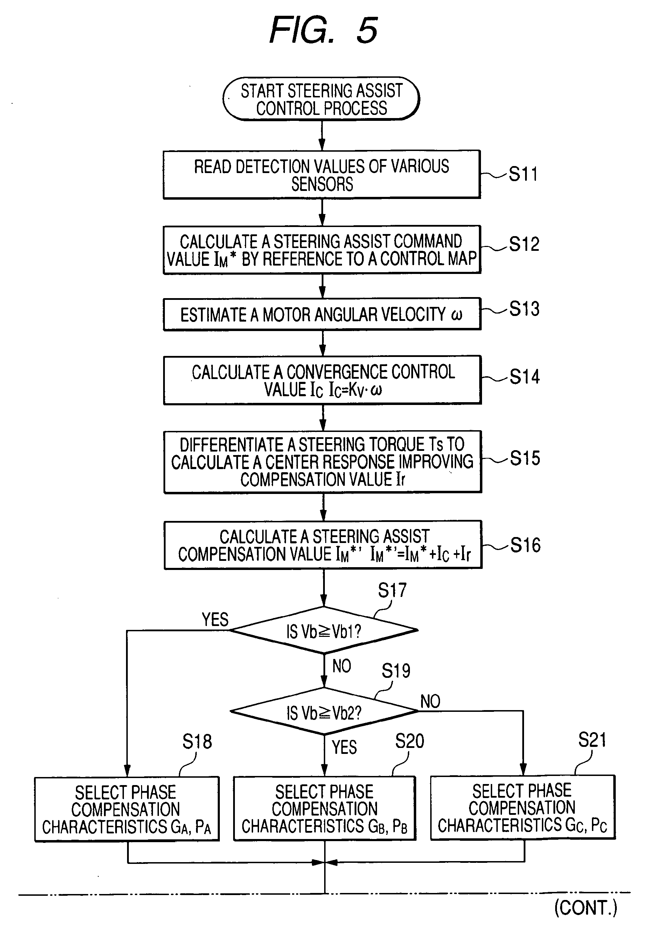

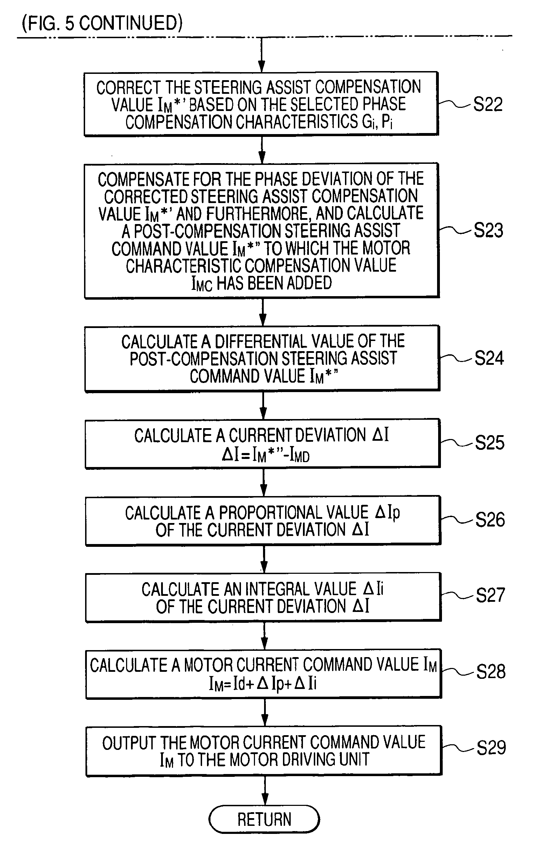

Next, a steering assist control process which is executed in the control unit 10 will be described by reference to Fig. 5.

As is shown in Fig. 5, in this steering assist control process, firstly, in step S11, detection values of the various sensors such as the torque sensor 7, the vehicle speed sensor 14, the motor current detection circuit 15, the inter-motor-terminal voltage detection circuit 16 and the battery voltage detection circuit 17 are read. Then, proceeding to step S12, a steering assist command value $I_M{}^*$ is calculated based on a steering torque T detected by the torque sensor 7 and a vehicle speed V detected by the vehicle speed sensor 14 by reference to the steering assist command value calculation map shown in Fig. 3.

Next, proceeding to step S13, a calculation expressed by the following equation (1) is carried out to estimate a motor angular velocity ω based on a motor current detection value $I_{MD}$ and an inter-motor-terminal voltage Vm, and then, the flow proceeds to step S14.

EP 1 798 132 A1

$$\omega = (Vm - I_{MD} \bullet Rm) / K_0 \qquad \cdots \cdots (1)$$

Where, Rm is a motor winding resistance, and $K_0$ is an electromotive force constant of the motor.

In step S14, the estimated motor angular velocity $\omega$ is multiplied by a gain Kv which is set based on the vehicle speed V to calculate a convergence control value Ic (=Kv•$\omega$). Then, proceeding to step S15, the steering torque T is differentiated to calculate a center response improving command value Ir which secures the safety in the assist characteristic non-sensing zone and compensates for a static friction. Then, the flow proceeds to step S16, where the steering assist command value $I_M^*$, the convergence control value Ic and the center response improving command value Ir are added together to calculate a steering assist compensation value $I_M^{*'}$, and thereafter, the flow proceeds to step S17.

In this step S17, whether or not the battery voltage Vb is the preset primary set voltage Vb1 or larger is determined. If the battery voltage Vb is equal to or larger than the primary set voltage Vb1 (for example, 9V), it is determined that the battery11 is in the normal state, the flow proceeds to step S18, where a phase characteristic made up of the gain characteristic $G_A$ and the phase characteristic $P_A$ shown in Figs. 4A and 4B, respectively, is selected. Then, the flow proceeds to step S22.

On the other hand, in step S17, if the battery voltage Vb is determined to be less than the primary set voltage Vb1, the flow proceeds to step S19, where whether or not the battery voltage Vb is equal to or larger than the secondary set voltage Vb2 (for example, 8V) which is lower than the primary set voltage Vb1 is determined. If the battery voltage Vb is equal to or larger than the secondary set voltage Vb2, the flow proceeds to step S20, where a phase characteristic made up of the gain characteristic $G_B$ and the phase characteristic $P_B$ shown in Figs. 4A and 4B, respectively, is selected. Then, the flow proceeds to step S22.

In addition, in step S19, if the battery voltage Vb is determined to be less than the secondary set voltage Vb2, the flow proceeds to step S21, where a phase characteristic made up of the gain characteristic $G_C$ and the phase characteristic $P_C$ shown in Figs. 4A and 4B, respectively, is selected. Then, the flow proceeds to step S22.

In step S22, a correction processing is carried out with respect to the steering assist compensation value $I_M^{*'}$ calculated in step S16 based on the gain characteristic $G_i$ and the phase characteristic $P_i$ (i=A, B, C). Then the flow proceeds to step S23, where the corrected steering assist compensation value $I_M^{*'}$ is subjected to robustness stabilization compensation processing to eliminate a phase deviation, and a motor characteristic compensation value $I_{MC}$ calculated based on the motor angular velocity $\omega$ is then added to the steering assist compensation value $I_M^{*'}$ which has undergone the robustness stabilization compensation processing to calculate a post-compensation steering assist command value $I_M^{*''}$.

Then, the flow proceeds to step S24, where the post-compensation steering assist command value $I_M^{*''}$ is differentiated to calculate a feedforward control differential value Id. Following this, the flow proceeds to step S25, where the motor current detection value $I_{MD}$ which was read in step S11 is subtracted from the post-compensation steering assist command value $I_M^{*''}$ to calculate a current deviation $\Delta I$. Then, proceeding to step S26, the current deviation $\Delta I$ is processed for the proportional calculation to calculate a proportional compensation control proportional value $\Delta Ip$. Then, proceeding to step S27, the current deviation $\Delta I$ is integrated to calculate an integral compensation control integral value $\Delta Ii$.

Following this, proceeding to step S28, the differential value Id, a proportional value $\Delta Ip$ and the integral value $\Delta Ii$ are added together to calculate a motor current command value $I_M$ (=Id+$\Delta Ip$+$\Delta Ii$). Then, proceeding to step 29, the motor current command value $I_M$ calculated in step S15 is outputted to the motor driving unit 52, and thereafter, the flow returns to step S1.

Next, the operation of the embodiment will be described.

Now, when the ignition key switch 12 is switched on to start the vehicle, power supply is made to the control unit 10, and the execution of the steering assist control process is started.

In this case, it is assumed that the battery voltage Vb is the primary set voltage Vb1 or larger and the battery 11 is in a normal state.

Consequently, in the steering assist control process shown in Fig. 5, the steering torque T detected by the torque sensor 7, the vehicle speed V detected by the vehicle speed sensor 14, the motor current detection value $I_{MD}$ detected by the motor current detection circuit 15 and the inter-motor-terminal voltage Vm detected by the inter-motor-terminal voltage detection circuit 16 are read (step S11). Then, the steering assist command value $I_M^*$ is calculated by reference to the steering assist command value calculation map based on the steering torque T and the vehicle speed V (step S12).

On the other hand, the calculation of the equation (1) is carried out to estimate the motor angular velocity $\omega$ based on the motor current detection value $I_{MD}$ detected by the motor current detection circuit 15 and the inter-motor-terminal voltage Vm detected by the inter-motor-terminal voltage detection circuit 16 (step S13).

Then, a convergence control value Ic is calculated based on the motor angular velocity $\omega$ (step S14), the steering torque T is differentiated to calculate the center response improving compensation value Ir (step S15), and the steering assist compensation value $I_M^{*'}$ is calculated by adding together the steering assist command value $I_M^*$, the convergence control

5

value Ic and the center response improving compensation value Ir (step S16).

On the other hand, since $Vb \geqq Vb1$ when comparing the battery voltage $Vb$ with the primary set voltage $Vb1$ (step S17), proceeding from step S17 to step 18, where the gain characteristic $G_A$ and the phase characteristic $P_A$ are selected as the phase compensation characteristic.

In this way, in the normal state of the battery 11 in which the battery voltage $Vb$ is the primary set voltage $Vb1$ or larger, the gain characteristic $G_A$ is such that the gain increases in the high frequency area where the frequency becomes higher than the resonance frequency $fr$ as shown in Fig. 4A, and the phase characteristic $PA$ is such that the slight phase advance amount results in the low frequency area where the frequency is lower than the resonance frequency $fr$ whereas in the high frequency area where the frequency is higher than the resonance frequency $fr$, the phase advance amount is increased. By correcting the steering assist compensation value $I_M{}^{*}$' with the gain characteristic $G_A$ and the phase characteristic $P_A$ which so were selected, the frequency response of the steering assist compensation value $I_M{}^{*}$' is increased, and the turning follow-up capability is increased when the steering wheel 1 is rapidly turned, thereby making it possible to carry out a good steering assist control.

Then, by giving the robustness stabilization compensation to the corrected steering assist compensation value $I_M{}^{*}$', the deviation in the resonance frequency $fr$ is compensated for, and the motor characteristic compensation value $I_{MC}$ is added to the compensated steering assist compensation value $I_M{}^{*}$' to calculate the post-compensation steering assist command value $I_M{}^{*}$" (step S23).

This post-compensation steering assist command value $I_M{}^{*}$" is differentiated to calculate the differential value Id, and the current deviation $\Delta I$ between the post-compensation steering assist command value $I_M{}^{*}$" and the motor current detection value $I_{MD}$ is calculated. Then, by adding together the proportional value $\Delta Ip$ of the current deviation $\Delta I$ and the integral value $\Delta Ii$ of the proportional value $\Delta Ip$, the motor current command value $I_M$ is calculated (steps S24 to S28), and the motor current command value $I_M$ so calculated is outputted to the motor driving unit 52 to thereby rotatably drive the motor 8 and generate a steering assist force which matches the steering torque applied to the steering wheel 1, so as to transmit the steering assist force so generated to an output shaft 2b via the speed reduction gear 11.

As this occurs, in a so-called stationary steering state where the steering wheel 1 is turned while the vehicle is stopped, the inclinations of the characteristic curves of the steering assist command value calculation map shown in Fig. 3 become steep, whereby a large steering assist command value $I_M{}^{*}$ is calculated with a small steering torque T. Therefore, a large steering assist force is generated by the motor 8 so as to effect a light steering.

On the other hand, when the vehicle starts to reach a predetermined vehicle speed, the inclinations of the characteristic curves of the steering assist command value calculation map shown in Fig. 3 become moderate, whereby a small steering assist command value $I_M{}^{*}$ is calculated even with a large steering torque T, and therefore, the steering assist force generated by the motor 8 is reduced, so as to effect an optimum steering by suppressing the occurrence of a too-light steering.

When the battery voltage $Vb$ of the battery 11 reduces below the primary set voltage $Vb1$, however, in the steering assist control process shown in Fig. 5, the flow proceeds from step S17 to step S18, where whether or not the battery voltage $Vb$ is equal to or larger than the secondary set voltage $Vb2$ which is lower than the primary set voltage $Vb1$ is determined, and if $Vb1 > Vb \geqq Vb2$, the flow proceeds to step S20, where the gain characteristic $G_B$ and the phase characteristic $P_B$ are selected.

When compared to the gain characteristic $G_A$ which is for the state where the battery 11 is in the normal state, this gain characteristic $G_B$ is such that the gain is decreased overall, and the phase characteristic $P_B$ is such that the phase delay occurs in the low frequency area where the frequency is lower than the resonance frequency $fr$, compared to the phase characteristic $G_A$, and the phase advance amount is reduced in the high frequency area where the frequency is higher than the resonance frequency $fr$. Therefore, the steering assist compensation value $I_M{}^{*}$' which is compensated for with respect to the phase based on the gain characteristic $G_B$ and the phase characteristic $P_B$ exhibits a characteristic in which the turning follow-up capability is suppressed, in particular, in the high frequency area in the normal state of the battery 11 so as to make the driver feel a tenacious feeling.

Due to this, the motor characteristic compensation value $I_{MC}$ is added to the steering assist compensation value $I_M{}^{*}$' which is compensated for robustness stabilization after having been compensated for phase, so as to calculate the post-compensation steering assist command value $I_M{}^{*}$", and the calculated value is subjected to a PID control to calculate the motor current command value $I_M$. Therefore, the rapid turning of the steering wheel can be suppressed, and as a result, the generation of counter electromotive force in the motor 8 is made difficult. Due to this, the steering wheel is turned slowly by such an extent that the counter electromotive force in the motor is made difficult to be generated, whereby the inter-motor-terminal voltage can be secured, so as to secure the steering assist force.

Then, when the battery voltage $Vb$ decreases further to be below the secondary set voltage $Vb2$, in the steering assist control process shown in Fig. 5, the flow proceeds from step S19 to step S21, where the gain characteristic $G_C$ and the phase characteristic $P_C$ are selected, whereby the rapid turning of the steering wheel is suppressed further, so that the generation of counter electromotive force in the motor 8 is made difficult further, forcing the driver to turn the steering wheel more slowly to thereby secure the inter-motor-terminal voltage for securing the steering assist force.

Thus, according to the first embodiment, when the battery voltage Vb decreases, the turning follow-up capability is suppressed to make the driver feel a tenacious steering feeling so as to prevent him or her from turning the steering wheel rapidly, whereby the generation of counter electromotive force in the motor 8 is made difficult, so that the state can continue to exist where the steering assist force is being generated. Therefore, an advantage can be obtained that the area where the steering assist force is so insufficient that the driver feels a heavy steering is mitigated so as to obtain a proper steering assist force. Moreover, by suppressing the rapid turning of the steering wheel in the manner described above, the increase in motor current can be suppressed, and even in the event that the internal resistance of the battery 11 which is deteriorated much is increased, the reduction in battery voltage is suppressed so as to secure the sufficient inter-motor-terminal voltage, whereby the problem can be avoided that the driver feels the heavy steering that would otherwise occur due to the reduction in the steering assist force.

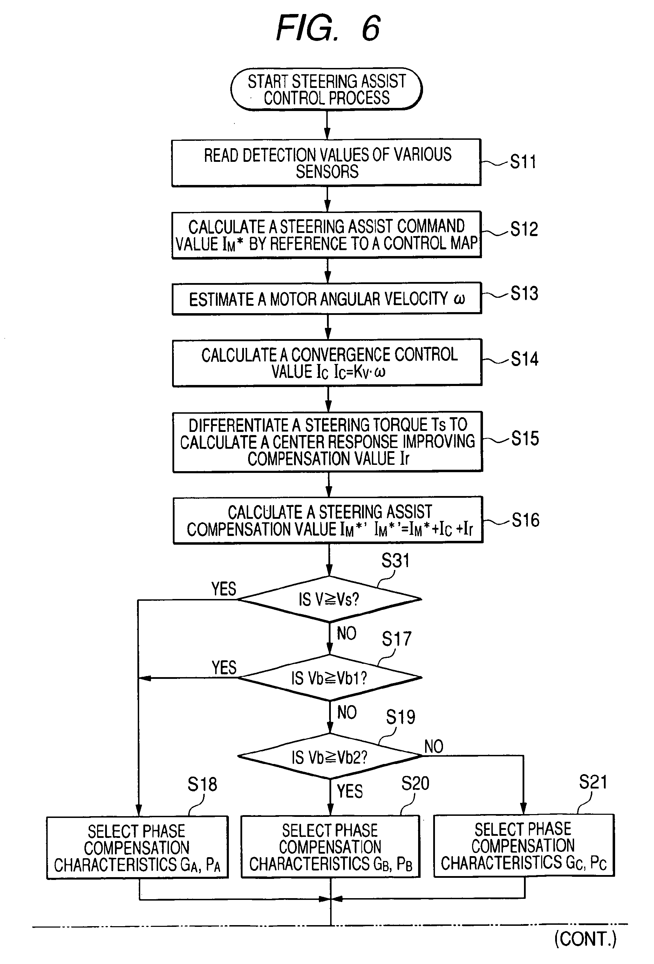

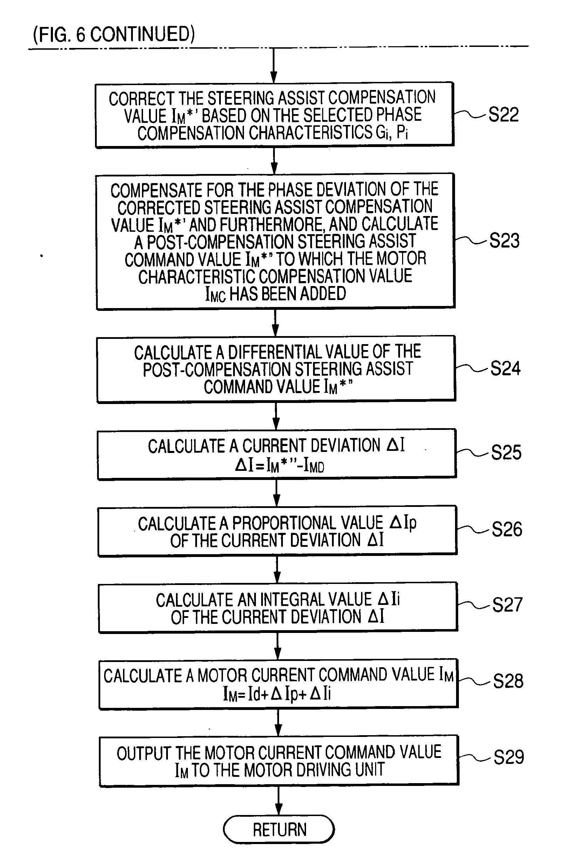

Next, a second embodiment of the invention will be described by reference to Fig. 6.
This second embodiment is such that the phase compensation characteristic is altered by the vehicle speed, as well.
Namely, in the second embodiment, as is shown in Fig. 6, a step 31 is interposed between the step 16 and the step 17 in the steering assist control process of the first embodiment shown in Fig. 5. In the step 31, whether or not the vehicle speed V is equal to or faster than a preset set vehicle speed Vs (for example, 5km/h) which does not need a large steering assist force is determined. If it is determined in this step 31 that $V \geqq Vs$, the flow proceeds to the step 18, whereas if $V < Vs$, the flow proceeds to the step S17. Thus, the steering assist control process according to the second embodiment has the same configuration as that of the first embodiment except for what has been described above about the additional step 31, and hence, like step numbers are imparted to like steps, so as to omit the detailed description thereof.

According to the second embodiment, in a state where the vehicle speed V is faster than the set vehicle speed Vs, since the vehicle is running and the frictional resistance on the road surface relative to the road wheels is reduced, no large steering assist force is required, and since in the normal state there occurs no case where the steering wheel is turned rapidly. Therefore, the gain characteristic $G_A$ and the phase characteristic $P_A$ are selected, irrespective of the battery voltage Vb, so that the state where the turning follow-up capability is enhanced is maintained so as to maintain the state where the response to the turning of the steering wheel 1 by the driver is enhanced. When the vehicle speed V decreases below the set vehicle speed Vs, however, a large steering assist force such as required for the stationary steering carried out when the vehicle is stopped is required, and there occurs a case where the steering wheel 1 needs to be turned rapidly. Therefore, by performing the phase compensation process according to the battery voltage Vb as done in the first embodiment, the turning follow-up capability is suppressed when the battery voltage Vb decreases, so as to control the drive of the motor 8 in such a manner as to make the driver feel the tenacious steering feeling, whereby the generation of counter electromotive force in the motor 8 is made difficult, so that the driver is forced to turn the steering wheel slowly to secure the inter-motor-terminal voltage to thereby allow the steering assist force generated state to continue to exist.

Note that while the first and second embodiments are described as the gain characteristic and the phase characteristic being switched in three stages according to the battery voltage Vb, the invention is not limited thereto, and hence the gain characteristic and the phase characteristic may be made to be switched in two stages or four stages. In addition, while the first and second embodiments are described as the control unit 10 being made up of the MCU to execute the steering assist control processes shown in Figs. 5 and 6, the invention is not limited thereto, and hence, by utilizing a hardware which corresponds to the function configuration block diagram shown in Fig. 2, the steering assist control may, of course, be designed to be executed by the hardware.

Furthermore, normally, the decrease in the battery voltage occurs generally when the ignition switch 12 is switched on from the off state to start the engine, and in this state, the steering wheel 1 is not manipulated generally. Therefore, the first and second embodiments are described as the phase compensation characteristics being selected when the battery voltage Vb decreases, but the invention is not limited thereto. For example, lateral acceleration sensors and yaw rate sensors may be provided to estimate a lateral acceleration from the vehicle speed and the steering angle and furthermore to detect a steering angular velocity, so as to detect a steering condition, whereby a steering stable state where steering is stable is determined so as to select the phase compensation characteristics when the steering is in the stable condition.

**Claims**

1.   An electric power steering system comprising:

   a current command value calculation unit for calculating a current command value based on a steering torque signal and a vehicle speed signal;
   a motor driving unit for controlling a motor for imparting a steering assist force to a steering mechanism based on the current command value;

a voltage detection unit for detecting a voltage of a power supply source for supplying power to the motor driving unit; and

a phase compensating unit provided on the current command value calculation unit and adapted to select characteristics based on a voltage of the power supply source.

2. An electric power steering system as set forth in Claim 1, wherein the phase compensating unit is adapted to select the characteristics so as to suppress a turning follow-up capability when the voltage detection unit detects that the voltage of the power supply source is lower than a set voltage.

3. An electric power steering system as set forth in Claim 1, wherein the phase compensating unit is adapted to select a characteristic to secure the turning follow-up capability when the value of a vehicle speed signal is a set value or larger, whereas with the value of the vehicle speed signal being smaller than the set value, the phase compensating unit is adapted to select a characteristic to suppress the turning follow-up capability when the voltage of the power supply source is lower than the set voltage.

## FIG. 1

EP 1 798 132 A1

# FIG. 2

EP 1 798 132 A1

# FIG. 3

## FIG. 4A

$G_A$   $G_B$   $G_C$

FREQUENCY

## FIG. 4B

$P_A$   $P_B$   $P_C$

FREQUENCY

12

# FIG. 5

```
        ┌──────────────────────────┐
        │   START STEERING ASSIST  │
        │     CONTROL PROCESS      │
        └──────────────────────────┘
                     │
                     ▼
        ┌──────────────────────────┐
        │  READ DETECTION VALUES   │──── S11
        │  OF VARIOUS SENSORS      │
        └──────────────────────────┘
                     │
                     ▼
        ┌──────────────────────────┐
        │ CALCULATE A STEERING     │──── S12
        │ ASSIST COMMAND VALUE Im* │
        │ BY REFERENCE TO A        │
        │ CONTROL MAP              │
        └──────────────────────────┘
```

READ DETECTION VALUES OF VARIOUS SENSORS — S11

CALCULATE A STEERING ASSIST COMMAND VALUE $I_M{}^*$ BY REFERENCE TO A CONTROL MAP — S12

ESTIMATE A MOTOR ANGULAR VELOCITY $\omega$ — S13

CALCULATE A CONVERGENCE CONTROL VALUE $I_C$  $I_C = K_V \cdot \omega$ — S14

DIFFERENTIATE A STEERING TORQUE $T_S$ TO CALCULATE A CENTER RESPONSE IMPROVING COMPENSATION VALUE $I_r$ — S15

CALCULATE A STEERING ASSIST COMPENSATION VALUE $I_M{}^{*\prime}$  $I_M{}^{*\prime} = I_M{}^* + I_C + I_r$ — S16

S17 — IS $V_b \geqq V_{b1}$?  — YES / NO

S19 — IS $V_b \geqq V_{b2}$? — NO / YES

S18 — SELECT PHASE COMPENSATION CHARACTERISTICS $G_A$, $P_A$

S20 — SELECT PHASE COMPENSATION CHARACTERISTICS $G_B$, $P_B$

S21 — SELECT PHASE COMPENSATION CHARACTERISTICS $G_C$, $P_C$

(CONT.)

(FIG. 5 CONTINUED)

CORRECT THE STEERING ASSIST COMPENSATION VALUE $I_M$*' BASED ON THE SELECTED PHASE COMPENSATION CHARACTERISTICS $G_i$, $P_i$ — S22

COMPENSATE FOR THE PHASE DEVIATION OF THE CORRECTED STEERING ASSIST COMPENSATION VALUE $I_M$*' AND FURTHERMORE, AND CALCULATE A POST-COMPENSATION STEERING ASSIST COMMAND VALUE $I_M$*" TO WHICH THE MOTOR CHARACTERISTIC COMPENSATION VALUE $I_{MC}$ HAS BEEN ADDED — S23

CALCULATE A DIFFERENTIAL VALUE OF THE POST-COMPENSATION STEERING ASSIST COMMAND VALUE $I_M$*" — S24

CALCULATE A CURRENT DEVIATION $\Delta I$
$\Delta I = I_M$*"$ - I_{MD}$ — S25

CALCULATE A PROPORTIONAL VALUE $\Delta Ip$ OF THE CURRENT DEVIATION $\Delta I$ — S26

CALCULATE AN INTEGRAL VALUE $\Delta Ii$ OF THE CURRENT DEVIATION $\Delta I$ — S27

CALCULATE A MOTOR CURRENT COMMAND VALUE $I_M$
$I_M = Id + \Delta Ip + \Delta Ii$ — S28

OUTPUT THE MOTOR CURRENT COMMAND VALUE $I_M$ TO THE MOTOR DRIVING UNIT — S29

RETURN

# FIG. 6

```
        ┌─────────────────────────┐
        │  START STEERING ASSIST  │
        │     CONTROL PROCESS     │
        └─────────────────────────┘
                     │
                     ▼
        ┌─────────────────────────┐
        │ READ DETECTION VALUES   │──── S11
        │ OF VARIOUS SENSORS      │
        └─────────────────────────┘
                     │
                     ▼
        ┌───────────────────────────────┐
        │ CALCULATE A STEERING ASSIST   │──── S12
        │ COMMAND VALUE Iₘ* BY REFERENCE│
        │ TO A CONTROL MAP              │
        └───────────────────────────────┘
                     │
                     ▼
        ┌───────────────────────────────┐
        │ ESTIMATE A MOTOR ANGULAR      │──── S13
        │ VELOCITY ω                    │
        └───────────────────────────────┘
                     │
                     ▼
        ┌───────────────────────────────┐
        │ CALCULATE A CONVERGENCE       │──── S14
        │ CONTROL VALUE Ic  Ic=Kv·ω     │
        └───────────────────────────────┘
                     │
                     ▼
        ┌───────────────────────────────┐
        │ DIFFERENTIATE A STEERING      │──── S15
        │ TORQUE Ts TO CALCULATE A      │
        │ CENTER RESPONSE IMPROVING     │
        │ COMPENSATION VALUE Ir         │
        └───────────────────────────────┘
                     │
                     ▼
        ┌───────────────────────────────┐
        │ CALCULATE A STEERING ASSIST   │──── S16
        │ COMPENSATION VALUE Iₘ*'        │
        │ Iₘ*'=Iₘ*+Ic +Ir               │
        └───────────────────────────────┘
```

- S16: CALCULATE A STEERING ASSIST COMPENSATION VALUE $I_M*'$  $I_M*'=I_M*+I_C+Ir$
- S31: IS $V \geqq Vs$?  — YES / NO
- S17: IS $Vb \geqq Vb1$?  — YES / NO
- S19: IS $Vb \geqq Vb2$?  — YES / NO
- S18: SELECT PHASE COMPENSATION CHARACTERISTICS $G_A$, $P_A$
- S20: SELECT PHASE COMPENSATION CHARACTERISTICS $G_B$, $P_B$
- S21: SELECT PHASE COMPENSATION CHARACTERISTICS $G_C$, $P_C$

(CONT.)

(FIG. 6 CONTINUED)

```
┌─────────────────────────────────────────┐
│ CORRECT THE STEERING ASSIST COMPENSATION │
│ VALUE $I_M*'$ BASED ON THE SELECTED PHASE │──S22
│ COMPENSATION CHARACTERISTICS $G_i$, $P_i$ │
└─────────────────────────────────────────┘
                    │
                    ▼
┌─────────────────────────────────────────┐
│ COMPENSATE FOR THE PHASE DEVIATION OF THE │
│ CORRECTED STEERING ASSIST COMPENSATION   │
│ VALUE $I_M*'$ AND FURTHERMORE, AND CALCULATE │
│ A POST-COMPENSATION STEERING ASSIST      │──S23
│ COMMAND VALUE $I_M*"$ TO WHICH THE MOTOR  │
│ CHARACTERISTIC COMPENSATION VALUE        │
│ $I_{MC}$ HAS BEEN ADDED                   │
└─────────────────────────────────────────┘
                    │
                    ▼
┌─────────────────────────────────────────┐
│ CALCULATE A DIFFERENTIAL VALUE OF THE    │
│ POST-COMPENSATION STEERING ASSIST        │──S24
│ COMMAND VALUE $I_M*"$                      │
└─────────────────────────────────────────┘
                    │
                    ▼
┌─────────────────────────────────────────┐
│ CALCULATE A CURRENT DEVIATION $\Delta I$  │
│ $\Delta I = I_M*" - I_{MD}$               │──S25
└─────────────────────────────────────────┘
                    │
                    ▼
┌─────────────────────────────────────────┐
│ CALCULATE A PROPORTIONAL VALUE $\Delta I_p$ │──S26
│ OF THE CURRENT DEVIATION $\Delta I$       │
└─────────────────────────────────────────┘
                    │
                    ▼
┌─────────────────────────────────────────┐
│ CALCULATE AN INTEGRAL VALUE $\Delta I_i$  │──S27
│ OF THE CURRENT DEVIATION $\Delta I$       │
└─────────────────────────────────────────┘
                    │
                    ▼
┌─────────────────────────────────────────┐
│ CALCULATE A MOTOR CURRENT COMMAND VALUE $I_M$ │──S28
│ $I_M = I_d + \Delta I_p + \Delta I_i$     │
└─────────────────────────────────────────┘
                    │
                    ▼
┌─────────────────────────────────────────┐
│ OUTPUT THE MOTOR CURRENT COMMAND VALUE   │──S29
│ $I_M$ TO THE MOTOR DRIVING UNIT           │
└─────────────────────────────────────────┘
                    │
                    ▼
              ( RETURN )
```

**European Patent Office**

**EUROPEAN SEARCH REPORT**

Application Number

EP 06 02 5874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 708 010 A2 (KOYO SEIKO CO [JP]; MATSUSHITA ELECTRIC IND CO LTD [JP]) 24 April 1996 (1996-04-24) * column 5, lines 37-56 * ----- | 1 | INV. B62D5/04 |
| A | JP 10 291482 A (KAYABA INDUSTRY CO LTD) 4 November 1998 (1998-11-04) * abstract * ----- | 1 | |
| A,D | JP 08 337172 A (NIPPON SEIKO KK) 24 December 1996 (1996-12-24) * abstract * ----- | 1 | |

TECHNICAL FIELDS
SEARCHED (IPC)

B62D

The present search report has been drawn up for all claims

| Place of search | Date of completion of the search | Examiner |
|---|---|---|
| Berlin | 16 March 2007 | Wisnicki, Michal |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                EP 06 02 5874

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2007

| Patent document cited in search report | | Publication date | Patent family member(s) | | Publication date |
|---|---|---|---|---|---|
| EP 0708010 | A2 | 24-04-1996 | DE | 69508179 D1 | 15-04-1999 |
| | | | DE | 69508179 T2 | 19-08-1999 |
| | | | JP | 3479730 B2 | 15-12-2003 |
| | | | JP | 8119134 A | 14-05-1996 |
| | | | US | 5752209 A | 12-05-1998 |
| JP 10291482 | A | 04-11-1998 | JP | 3814680 B2 | 30-08-2006 |
| JP 8337172 | A | 24-12-1996 | JP | 3562040 B2 | 08-09-2004 |

EPO FORM P0459

For more details about this annex : see Official Journal of the European Patent Office, No. 12/82

**EP 1 798 132 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8337172 A